# EUROPEAN PATENT APPLICATION

(11) **EP 4 629 560 A1**
(43) Date of publication of application: **08.10.2025**
(21) Application number: 22967472.6
(22) Date of filing: 05.12.2022
(51) Int. Cl.: H04L 9/32

(54) **COMMUNICATION METHOD, NODE, COMMUNICATION SYSTEM, AND MOBILE CARRIER**

(71) Applicant: Shenzhen Yinwang Intelligent Technologies Co., Ltd., Shenzhen, Guangdong 518129 (CN)
(72) Inventor: ZHANG, Li, Shenzhen, Guangdong 518129 (CN); ZHONG, Steven Yin, Shenzhen, Guangdong 518129 (CN); LIEW, Lin Shen, Shenzhen, Guangdong 518129 (CN); YANG, Yanjiang, Shenzhen, Guangdong 518129 (CN)
(74) Representative: Gill Jennings & Every LLP
(86) International application number: PCT/CN2022/136574
(87) International publication number: WO 2024/119308

(57) **Abstract**

Embodiments of this application provide a communication method, a node, a communication system, and a moving carrier. The communication method includes: receiving a first request from a first node, where the first request is used to request first information, the first information is information related to a start node, and the first request includes a first signature; determining, based on the first signature and a second signature, a third signature when check on the first signature succeeds, where the second signature is obtained by signing first call chain information, the first call chain information indicates related node information of the first information in a second node, and the first call chain information includes start node information; and sending a second request to a third node, where the second request includes the third signature, and the second request is used to request the first information. **In** this way, security of data transmission of each node can be further improved, so that security of global chained call request transmission is improved.

## Description

### TECHNICAL FIELD

Embodiments of this application relate to the field of communication security, and specifically relate to a communication method, a node, a communication system, and a moving carrier.

### BACKGROUND

**In** the field of communication security, a cryptographic technology is generally used to ensure security and integrity of data transmission. At present, there is a well-developed technology for a case in which the cryptographic technology is used between a data sender and a data receiver. However, when chained transmission of data exists, for example, in a service call chain scenario, if an intermediate node is hijacked, based on the current cryptographic technology between two nodes, the hijacked intermediate node may unconditionally call a service of a downstream node.

Therefore, how to improve security of chained data transmission becomes an urgent problem to be resolved.

### SUMMARY

Embodiments of this application provide a communication method, a node, a communication system, and a moving carrier, to improve security of data transmission of each node, so as to improve security of transmission of a global chain call request.

The moving carrier in this application may include a road transportation means, a water transportation means, an air transportation means, an industrial device, an agricultural device, an entertainment device, or the like. For example, the moving carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application. For another example, the moving carrier may be a transportation means, for example, an airplane or a ship. The following uses an example in which the moving carrier is a vehicle for description.

According to a first aspect, a communication method is provided. The method is applied to a second node. The method includes: receiving a first request from a first node, where the first request is used to request first information, the first information is information related to a start node, and the first request includes a first signature; determining, based on the first signature and a second signature, a third signature when check on the first signature succeeds, where the second signature is obtained by signing first call chain information, the first call chain information indicates related node information of the first information in the second node, and the first call chain information includes start node information; and sending a second request to a third node, where the second request includes the third signature, and the second request is used to request the first information.

It should be understood that each node may represent a different platform. Alternatively, each node may represent an application module or a service module of a different platform. When each node represents an application module or a service module of a different platform, each platform may have a different service module or application module based on a type of each request.

For example, if a type of the first request is a control request, each node represents a control application module or a control service module of each platform. If a type of the first request is a diagnosis request, each node represents a diagnosis application module or a diagnosis service module of each platform.

It should be understood that the first information may be instruction information generated by a start node, so that an end node performs an operation indicated by the instruction information; or the first information may be information required by a start node, so that an end node feeds back corresponding obtained information.

In other words, when each node represents an application module or a service module of a different platform, an application module or a service module corresponding to an end node performs an operation indicated by instruction information. If the third node is an end node, the second request indicates an application module or a service module of the third node to perform the operation indicated by the first information. Alternatively, an application module or a service module corresponding to an end node feeds back obtained information. If the third node is the end node, the second request is used to call the first information from an application module or a service module corresponding to the third node.

When the first node is the start node, the first information is instruction information generated by the first node or information required by the first node. When the first node is a non-start node, the first information may be instruction information or information that is transmitted from the start node to the first node along a call chain and then sent to the second node by using the first request.

The first call chain information may also be understood as call chain information indicating that the first information is in the second node.

In other words, the first call chain information indicates path information for requesting the first information in the second node.

When the first node is the start node, the first call chain information includes first node information, for example, an identity of the first node.

In the foregoing technical solution, after receiving a request, the third node, as a downstream node of an intermediate node, checks the third signature determined based on the first signature and the second signature. In this way, even after the second node is hijacked, when the hijacked second node sends a request to the third node, the request does not include related signature information of the first node. Therefore, because the third node cannot check the related signature information of the first node when checking a signature, the third node does not unconditionally respond to the request of the hijacked second node. In this way, security of data transmission of each node can be further improved, so that security of global chained call request transmission is improved.

With reference to the first aspect, in some implementations of the first aspect, the third signature includes the first signature and the second signature.

In the foregoing technical solution, the third signature includes signatures corresponding to a plurality of nodes, so that security of transmitting a global chained call request can be simply and efficiently improved.

With reference to the first aspect, in some implementations of the first aspect, determining, based on the first signature and the second signature, the third signature includes: multiplying the first signature and the second signature to obtain the third signature. Alternatively, the first signature and the second signature are integrated based on an elliptic curve to obtain the third signature. The first call chain information is different from second call chain information, the second call chain information indicates related node information of the first information in the first node, and the second request further includes the first call chain information and the second call chain information.

In the foregoing technical solution, a signature in a request is a single signature obtained by integrating signatures corresponding to a plurality of nodes. This improves security of global chained request transmission, and further saves a transmission bandwidth of the request.

With reference to the first aspect, in some implementations of the first aspect, determining, based on the first signature and the second signature, the third signature includes: multiplying the first signature and the second signature to obtain the third signature. Alternatively, the first signature and the second signature are integrated based on an elliptic curve to obtain the third signature. The first call chain information is the same as second call chain information, the second call chain information indicates related node information of the first information in the first node, and the second request further includes the first call chain information or the second call chain information.

In the foregoing technical solution, signed objects generated by nodes are the same, and a signature in a request transmitted between nodes is a single signature obtained by integrating signatures corresponding to a plurality of nodes. This improves security of global chained call request transmission, saves a transmission bandwidth of the request, and saves computing power.

With reference to the first aspect, in some implementations of the first aspect, the second request further includes a first fresh value, the first fresh value indicates timeliness of the first call chain information, and the second signature is obtained by signing the first call chain information and the first fresh value.

In this way, when the second request includes the first fresh value, spoofing, tampering, and replay of service call information can be effectively prevented, to further improve call request security.

With reference to the first aspect, in some implementations of the first aspect, the first request further includes first control flow information, and the first control flow information includes a running path of a control program of the first node. Determining, based on the first signature and the second signature, the third signature when the check on the first signature succeeds includes: when check on the first signature succeeds and check on the first control flow information succeeds, determining the third signature based on the first signature and the second signature.

In this way, control flow information of an upstream node is added to the first request, so that a program code reuse attack, for example, return-oriented programming (return-oriented programming, ROP) or jump-oriented programming (jump-oriented programming, JOP), can be effectively prevented and discovered.

With reference to the first aspect, in some implementations of the first aspect, second control flow information of the second node is collected by using hardware, where the second control flow information includes a running path of a control program of the second node, and the second request further includes the second control flow information.

In this way, the second control flow information is directly collected by using specific hardware corresponding to a node, and a software module does not need to collect the second control flow information. This can reduce a delay.

According to a second aspect, a communication method is provided. The method is applied to a third node, and the method includes: receiving a second request from a second node, where the second request includes a third signature, the second request is used to request first information, and the first information is information related to a start node; and checking the third signature, where the third signature is determined by the second node based on a first signature and a second signature, the first signature is from a first request of a first node, the second signature is obtained by the second node by signing first call chain information, the first call chain information indicates related node information of the first information in the second node, and the first call chain information includes start node information.

For technical effect related to the second aspect, refer to related descriptions of the first aspect.

With reference to the second aspect, in some implementations of the second aspect, the third signature includes the first signature and the second signature. Checking the third signature includes: checking the signatures in the third signature one by one.

With reference to the second aspect, in some implementations of the second aspect, the third signature is obtained by the second node by multiplying the first signature and the second signature, or is obtained by integrating the first signature and the second signature based on an elliptic curve. The method further includes: obtaining a first public key, where the first public key includes a public key of the second node and a public key of a node before the second node. Checking the third signature includes: checking the third signature based on the first public key, the first call chain information, and second call chain information. The second call chain information indicates related node information of the first information in the first node, and the second request further includes the first call chain information and/or the second call chain information.

With reference to the second aspect, in some implementations of the second aspect, when the first call chain information is different from the second call chain information, the second request includes the first call chain information and the second call chain information. Checking the third signature based on the first public key, the first call chain information, and the second call chain information includes: obtaining a first signature credential based on the first public key, the first call chain information, and the second call chain information; obtaining first to-be-verified information based on the third signature; and determining, based on the first signature credential and the first to-be-verified information, whether the check on the third signature succeeds.

With reference to the second aspect, in some implementations of the second aspect, when the first call chain information is the same as the second call chain information, the second request includes the first call chain information or the second call chain information. Checking the third signature based on the first public key, the first call chain information, and the second call chain information includes: obtaining a sum of public keys based on the first public key; obtaining a second signature credential based on the first call chain information or the second call chain information, and the sum of public keys; obtaining second to-be-verified information based on the third signature; and determining, based on the second signature credential and the second to-be-verified information, whether the check on the third signature succeeds.

With reference to the second aspect, in some implementations of the second aspect, the second request further includes a first fresh value, the first fresh value indicates timeliness of the first call chain information, and the second signature is obtained by signing the first call chain information and the first fresh value.

With reference to the second aspect, in some implementations of the second aspect, the second request further includes second control flow information, and the second control flow information indicates a running path of a control program of the second node. When the check on the third signature succeeds, the method further includes: checking whether the second control flow information is correct.

With reference to the second aspect, in some implementations of the second aspect, when the check on the third signature succeeds and the check on the second control flow information succeeds, the method further includes: determining a fifth signature based on the third signature and a fourth signature, where the fourth signature is obtained by the third node by signing third call chain information, and the third call chain information indicates related node information of the first information in the third node; and sending a third request to a fourth node, where the third request includes a third fifth signature, and the third request is used to request the first information.

With reference to the second aspect, in some implementations of the second aspect, when the check on the third signature succeeds and the check on the second control flow information succeeds, the method further includes: responding to the first information based on the second request.

According to a third aspect, a node is provided. The node includes a communication unit and a processing unit. The communication unit is configured to receive a first request from a first node, where the first request is used to request first information, the first information is information related to a start node, and the first request includes a first signature. When check on the first signature succeeds, the processing unit is configured to determine a third signature based on the first signature and a second signature, where the second signature is obtained by signing first call chain information, the first call chain information indicates related node information of the first information in a second node, and the first call chain information includes start node information. The communication unit is further configured to send a second request to a third node, where the second request includes the third signature, and the second request is used to request the first information.

For technical effect related to the third aspect, refer to related descriptions of the first aspect.

With reference to the third aspect, in some implementations of the third aspect, the third signature includes the first signature and the second signature.

With reference to the third aspect, in some implementations of the third aspect, the processing unit is specifically configured to multiply the first signature and the second signature to obtain the third signature. Alternatively, the first signature and the second signature are integrated based on an elliptic curve to obtain the third signature. The first call chain information is different from second call chain information, the second call chain information indicates related node information of the first information in the first node, and the second request further includes the first call chain information and the second call chain information.

With reference to the third aspect, in some implementations of the third aspect, the processing unit is specifically configured to multiply the first signature and the second signature to obtain the third signature. Alternatively, the first signature and the second signature are integrated based on an elliptic curve to obtain the third signature. The first call chain information is the same as second call chain information, the second call chain information indicates related node information of the first information in the first node, and the second request further includes the first call chain information or the second call chain information.

With reference to the third aspect, in some implementations of the third aspect, the second request further includes a first fresh value, the first fresh value indicates timeliness of the first call chain information, and the second signature is obtained by signing the first call chain information and the first fresh value.

With reference to the third aspect, in some implementations of the third aspect, the first request further includes first control flow information, and the first control flow information includes a running path of a control program of the first node. When check on the first signature succeeds, the processing unit is specifically configured to: when check on the first signature succeeds and check on the first control flow information succeeds, determine, by the second node, the third signature based on the first signature and the second signature.

With reference to the third aspect, in some implementations of the third aspect, the processing unit is further configured to collect second control flow information of the second node by using hardware, where the second control flow information includes a running path of a control program of the second node, and the second request further includes the second control flow information.

According to a fourth aspect, a node is provided. The node includes a communication unit and a processing unit. The communication unit is configured to receive a second request from a second node, where the second request includes a third signature, the second request is used to request first information, and the first information is information related to a start node. The processing unit is configured to check a third signature, where the third signature is determined by the second node based on a first signature and a second signature, the first signature is from a first request of a first node, the second signature is obtained by the second node by signing first call chain information, the first call chain information indicates related node information of the first information in the second node, and the first call chain information includes start node information.

For technical effect related to the fourth aspect, refer to related descriptions of the first aspect.

With reference to the fourth aspect, in some implementations of the fourth aspect, the third signature includes the first signature and the second signature. The processing unit is specifically configured to check the signatures in the third signature one by one.

With reference to the fourth aspect, in some implementations of the fourth aspect, the third signature is obtained by the second node by multiplying the first signature and the second signature, or is obtained by integrating the first signature and the second signature based on an elliptic curve. The node further includes an obtaining unit, where the obtaining unit is configured to obtain a first public key, where the first public key includes a public key of the first second node and a public key of a node before the second node. The processing unit is specifically configured to check the third signature based on the first public key, the first call chain information, and second call chain information. The second call chain information indicates related node information of the first information in the first node, and the second request further includes the first call chain information and/or the second call chain information.

With reference to the fourth aspect, in some implementations of the fourth aspect, when the first call chain information is different from the second call chain information, the second request includes the first call chain information and the second call chain information. The processing unit is specifically configured to obtain a first signature credential based on the first public key, the first call chain information, and the second call chain information; obtain first to-be-verified information based on the third signature; and determine, based on the first signature credential and the first to-be-verified information, whether the check on the third signature succeeds.

With reference to the fourth aspect, in some implementations of the fourth aspect, when the first call chain information is the same as the second call chain information, the second request includes the first call chain information or the second call chain information. The processing unit is specifically configured to obtain a sum of public keys based on the first public key; obtain a second signature credential based on the first call chain information or the second call chain information, and the sum of public keys; obtain second to-be-verified information based on the third signature; and determine, based on the second signature credential and the second to-be-verified information, whether the check on the third signature succeeds.

With reference to the fourth aspect, in some implementations of the fourth aspect, the second request further includes a first fresh value, the first fresh value indicates timeliness of the first call chain information, and the second signature is obtained by signing the first call chain information and the first fresh value.

With reference to the fourth aspect, in some implementations of the fourth aspect, the second request further includes second control flow information, and the second control flow information indicates a running path of a control program of the second node. When the check on the third signature succeeds, the processing unit is further configured to check whether the second control flow information is correct.

With reference to the fourth aspect, in some implementations of the fourth aspect, when the check on the third signature succeeds and the check on the second control flow information succeeds, the processing unit is further configured to determine a fifth signature based on the third signature and a fourth signature, where the fourth signature is obtained by the third node by signing third call chain information, and the third call chain information indicates related node information of the first information in the third node. The communication unit is further configured to send a third request to a fourth node, where the third request includes a third fifth signature, and the third request is used to request the first information.

With reference to the fourth aspect, in some implementations of the fourth aspect, when the check on the third signature succeeds and the check on the second control flow information succeeds, the processing unit is further configured to respond to the first information by a third node based on the second request.

According to a fifth aspect, a node is provided. The node includes a processor and a memory, the storage unit is configured to store instructions, and the processing unit executes the instructions stored in the storage unit, so that the node performs the method in any possible implementation of the first aspect, or the node performs the method in any possible implementation of the second aspect.

According to a sixth aspect, a communication system is provided. The system includes any possible node in the third aspect or the fourth aspect.

According to a seventh aspect, a moving carrier is provided. The moving carrier includes any possible node in the third aspect, the fourth aspect, or the fifth aspect, or includes the system according to the sixth aspect.

In some possible implementations, the moving carrier is a vehicle.

According to an eighth aspect, a computer program product is provided. The computer program product includes computer program code. When the computer program code is run on a computer, the computer is enabled to perform the method in any possible implementation of the first aspect, or the apparatus is enabled to perform the method in any possible implementation of the second aspect.

It should be noted that all or a part of the computer program code may be stored in a first storage medium. The first storage medium may be packaged together with a processor, or may be packaged separately from a processor. This is not specifically limited in this embodiment of this application.

According to a ninth aspect, a computer-readable medium is provided, where the computer-readable medium stores program code, and when the computer program code is run on a computer, the computer is enabled to perform the method in any possible implementation of the first aspect, or the apparatus is enabled to perform the method in any possible implementation of the second aspect.

According to a tenth aspect, an embodiment of this application provides a chip system. The chip system includes a processor, configured to invoke a computer program or computer instructions stored in a memory, so that the processor performs the method in any possible implementation of the first aspect, or the apparatus performs the method in any possible implementation of the second aspect.

With reference to the tenth aspect, in a possible implementation, the processor is coupled to the memory through an interface.

With reference to the tenth aspect, in a possible implementation, the chip system further includes a memory, and the memory stores a computer program or computer instructions.

### BRIEF DESCRIPTION OF DRAWINGS

FIG. 1 is a diagram of a chain scenario of an in-vehicle service call according to an embodiment of this application;
FIG. 2 is a schematic flowchart of a communication method according to an embodiment of this application;
FIG. 3A and FIG. 3B are a diagram of interaction in another communication method according to an embodiment of this application;
FIG. 4 is a diagram of still another communication method according to an embodiment of this application;
FIG. 5 is a diagram of yet another communication method according to an embodiment of this application;
FIG. 6 is a diagram of still yet another communication method according to an embodiment of this application;
FIG. 7 is a diagram of an in-vehicle call chain according to an embodiment of this application;
FIG. 8 is a diagram of a communication method for an in-vehicle remote diagnosis call chain according to an embodiment of this application;
FIG. 9 is a diagram of a node according to an embodiment of this application; and
FIG. 10 is a diagram of a hardware structure of a node according to an embodiment of this application.

### DESCRIPTION OF EMBODIMENTS

The following describes technical solutions of embodiments in this application with reference to accompanying drawings.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. In addition, "and/or" describes an association between associated objects, and indicates that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first" and "second" indicate differentiation for ease of description, but are not used to limit the scope of embodiments of this application, for example, are intended to distinguish between different nodes but not to describe a specific order or sequence. It should be understood that objects described in this way are interchangeable in an appropriate circumstance, so that a solution other than embodiments of this application can be described.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information is described as indicating A, the indication information may directly indicate A or indirectly indicate A, but it does not indicate that the indication information definitely carries A.

Seventh, in this application, "store" may refer to being stored in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

At present, a cryptology technology in communication security is mainly aimed at security and integrity of data transmission between two nodes. For a chain transmission scenario, for example, a chain scenario of an in-vehicle service call, if an intermediate node is hijacked, in a current cryptographic technology between two nodes, a downstream node is unconditionally called and the intermediate node being attacked cannot be identified.

With intelligentization and networking of automobiles, a user has increasingly higher requirements for personalized functions and services. A service-oriented architecture (service-oriented architecture, SOA) is used by more automobile manufacturers because the service-oriented architecture can implement software modularization and decouple a software module from hardware and an operating environment to avoid repeated development and facilitate rapid launch of a new service and expansion.

To provide a service call requirement for the SOA architecture, the automotive open system architecture (automotive open system architecture, AUTOSAR) alliance proposes a scalable service-oriented middleware over IP protocol (scalable service-oriented middleware over IP protocol, SOME/IP). The SOME/IP protocol can effectively meet interaction and communication of an in-vehicle service. However, the SOME/IP protocol does not have any security mechanism and cannot ensure integrity, authenticity, and security of information transmission.

Therefore, currently, a lower-layer general security protocol is generally used to meet a security requirement of in-vehicle communication. However, general security protocol only considers authentication and protection between two points of a service call. For example, internet protocol security (internet protocol security, IPSec), transport layer security (transport layer security, TLS), or datagram transport layer security (datagram transport layer security, DTLS) is a general security protocol.

For example, IPSec is a secure communication mechanism for a service call between two electronic control units (electronic control units, ECUs). Specifically, a key is preset in each ECU, and each ECU derives its own key based on the preset key. When a target ECU needs to request information or call a service from the source ECU, the source ECU needs to send a packet to the target ECU, and the source ECU uses a cipher suite to implement integrity authentication and encryption. The cipher suite may use a symmetric key algorithm AES-CGM-128. The target ECU uses the cipher suite to perform integrity authentication and decryption on the packet. IPSec has the following disadvantages: In IPSec, a secure communication channel can be only established between ECUs, but secure communication between different services and applications on a same ECU cannot be ensured.

For example, a certificate may implement secure communication between different in-vehicle services. The certificate is used to transfer security levels between services. A service provider (service source party) provides a corresponding service for a service caller (target service party) only when a minimum security level of the service caller is less than or equal to a security level of the service provider. After a security level condition is met, integrity and authenticity of data transmission between the service provider and the service caller are ensured based on a digital signature. In addition, the service provider generates a session key, encrypts the session key using a public key of the service caller, and transfers the encrypted session key to the service caller, to implement secure communication between the service provider and the service caller. The two security protocols are applied to in-vehicle communication. The certificate requires large storage space, and certificate transmission also requires a large bandwidth, a long delay is caused, and certificate authentication also has a specific requirement on a computing resource. These problems are not suitable in an in-vehicle communication scenario.

The foregoing security mechanism ensures authentication and protection of both parties during data transmission, but cannot ensure security, integrity, and authenticity of information transmission in a service call chain transmission scenario. The following uses a chain scenario of an in-vehicle service call as an example for description.

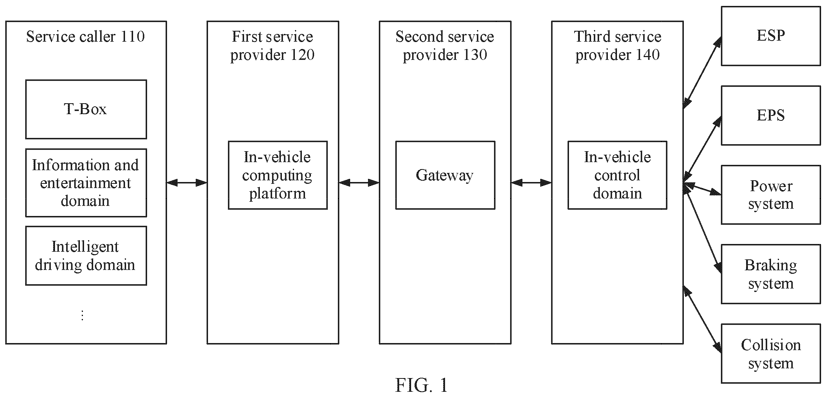

FIG. 1 is a diagram of a chain scenario of an in-vehicle service call according to an embodiment of this application.

As shown in FIG. 1, the chain scenario of the in-vehicle service call includes a service caller 110. The service caller 110 is usually a related device for in-vehicle and out-of-vehicle communication, for example, a telematics box (telematics box, T-Box), a related device in an entertainment information domain, or a related device in an intelligent driving domain. A 4G/5G interface of the T-Box is used to implement remote control or remote diagnosis of an intelligent connected vehicle. An entertainment information domain of the intelligent connected vehicle is controlled through Bluetooth communication.

The chain scenario of the in-vehicle service call may include a plurality of service providers. As shown in FIG. 1, the chain scenario of the in-vehicle service call may include a first service provider 120, a second service provider 130, and a third service provider 140. For example, the first service provider 120 may be an in-vehicle computing platform. The second service provider 130 may be a gateway. A type of the gateway is not limited in this embodiment of this application, for example, may be a distributed gateway. The third service provider 140 may be an in-vehicle control domain. The third service provider 140 may be connected to a specific in-vehicle control device, for example, an electronic stability program (electronic stability program, ESP), an electric power steering (electric power steering, EPS) system, a power system, a braking system, and a collision system. In addition, the chain scenario of the in-vehicle service call may also be applied to vehicle thermal management or cockpit control, which is not shown in FIG. 1.

Generally, when receiving an outside-vehicle control signal or diagnosis signal, the service caller 110 converts the signal into a corresponding service call request, and sends the corresponding service call request to a service provider to obtain a corresponding service. For example, if the service caller 110 needs to call related information of any service provider, the service caller 110 may send a service call request by using a transmission chain shown in FIG. 1, so that a corresponding service provider feeds back corresponding service information. For another example, if the service caller 110 controls any service provider to perform a corresponding operation, the service call request may be sent by using a transmission chain shown in FIG. 1, so that a corresponding service provider performs a corresponding operation in response to the service call request.

The foregoing in-vehicle secure communication mechanism is authentication and protection between the service caller and the service provider. When an intermediate node is hijacked, that is, the first service provider 120 is hijacked, security, integrity, and authenticity of the service call request previously transmitted by the first service provider 120 and the second service provider 130 cannot be ensured.

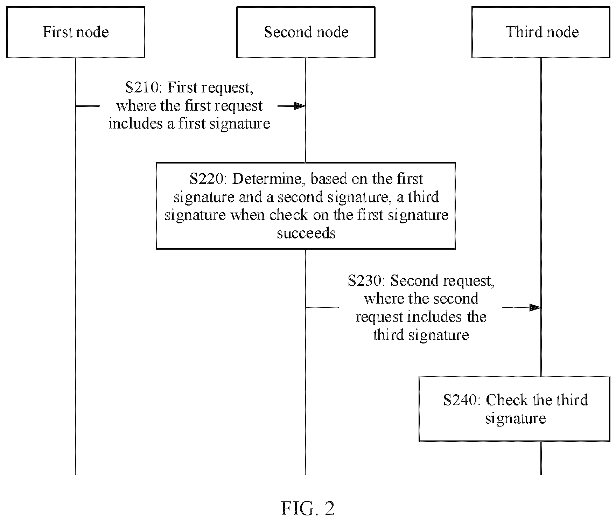

To resolve the foregoing problem, embodiments of this application provide a communication method, a node, a communication system, and a moving carrier. The following describes the communication method in detail with reference to FIG. 2 to FIG. 8.

First, professional terms in embodiments of this application are briefly described.

### 1. Digital signature

The digital signature is application of an asymmetric key encryption technology and a digital digest technology. The digital signature is a digital string that is generated by an information sender and that cannot be forged. The digital string can ensure integrity of information sent by the information sender and authenticity of an identity of the sender. The digital signature has nonrepudiation.

### 2. Control flow graph (control flow graph, CFG)

The control flow graph is an abstract representation of a process or program, and is an abstract data structure used in a compiler. The control flow graph is internally maintained by the compiler, and represents all paths to be traversed during execution of a program. The control flow graph represents, in a form of graph, a possible flow direction of execution of all basic blocks in one process, and can further reflect a real-time execution process of the process.

FIG. 2 is a schematic flowchart of a communication method according to an embodiment of this application. Each node performing the method shown in FIG. 2 may represent a different platform. Alternatively, each node may represent an application module or a service module of a different platform. When each node represents an application module or a service module of a different platform, each platform may have a plurality of service modules or application modules based on types of requests, and each request is used to request information from a corresponding service module or application module.

For example, the method shown in FIG. 2 is applied to an in-vehicle communication system. A first node may be the T-Box in FIG. 1, a second node may be the in-vehicle computing platform shown in FIG. 1, and a third node may be the gateway shown in FIG. 1. Alternatively, a first node may be an application module or a service module of the T-Box, a second node may be an application module or a service module of the in-vehicle computing platform, and a third node may be an application module or a service module of the gateway. Each node may be specifically executed by an electronic device corresponding to each platform.

S210: The first node sends a first request to the second node, and the second node receives the first request from the first node, where the first request is used to request first information, the first information is information related to a start node, and the first request includes a first signature.

It should be understood that the first information may be instruction information generated by a start node, so that an end node performs an operation indicated by the instruction information; or the first information may be information required by a start node, so that an end node feeds back corresponding obtained information.

For example, in the in-vehicle communication system, the instruction information generated by the start node may be vehicle door control instruction information and the like, and the information required by the start node may be vehicle speed information and the like.

When the first node is the start node, the first information is instruction information generated by the first node or information required by the first node. When the first node is a non-start node, the first information may be instruction information or information that is transmitted from the start node to the first node along a call chain and then sent to the second node by using the first request.

When the first node is the start node, the first signature may be understood as a node signature of the first node, namely, a node signature generated by the first node by using a private key of the first node. When the first node is a non-start node, the first signature may indicate node signatures corresponding to the first node and a node before the first node. That is, the first signature may include a plurality of node signatures of the first node and the node before the first node. Alternatively, the first signature may be a single signature, and the single signature indicates node signatures corresponding to the first node and a node before the first node.

S220: Determine, based on the first signature and a second signature, a third signature when check on the first signature succeeds, where the second signature is obtained by signing first call chain information, the first call chain information indicates related node information of the first information in the second node, and the first call chain information includes start node information.

It should be understood that the second signature may be a node signature of the second node, that is, the second signature may be obtained by the second node by signing a signature object (for example, the first call chain information).

In a possible implementation, the second signature may alternatively be obtained by signing first call information and a first fresh value. The first information fresh value indicates timeliness of the first call chain information.

The first call chain information may also be understood as call chain information indicating that the first information is in the second node. In other words, the first call chain information indicates path information for requesting the first information in the second node.

For example, the first call chain information may indicate a related start node of the first information in the second node. When the first node is the start node, the first call chain information may include start node information. For example, the start node information is an identity of the first node.

For example, the first call chain information may indicate a call chain from a related start node of the first information in the second node to a current node. When the first node is a start node, the first call chain information may include first node information and second node information, for example, an identity of the first node and an identity of the second node.

For example, the first call chain information may indicate call chains from a related start node of the first information in the second node to a current node and a downstream node of the current node. When the first node is the start node, the first call chain information may include first node information, second node information, and third node information, for example, an identity of the first node, an identity of the second node, and an identity of the third node.

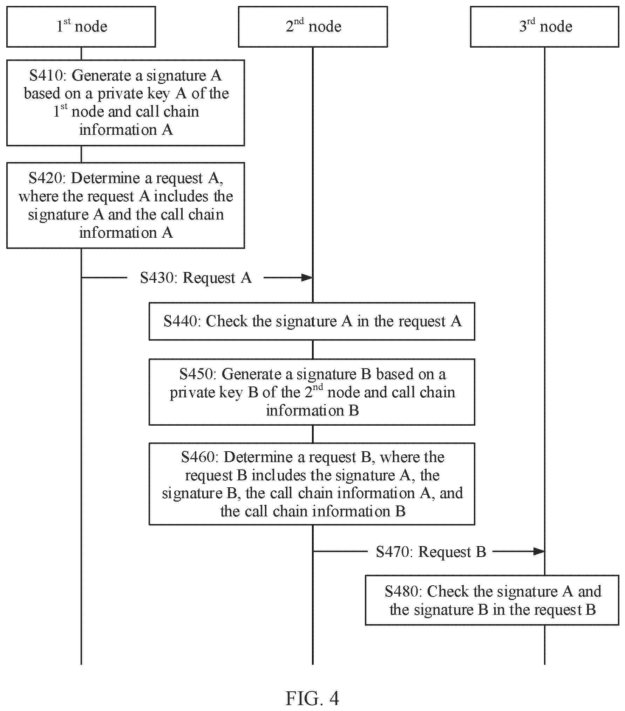

In a possible implementation, the third signature includes the first signature and the second signature. A specific explanation is described in detail with reference to FIG. 4.

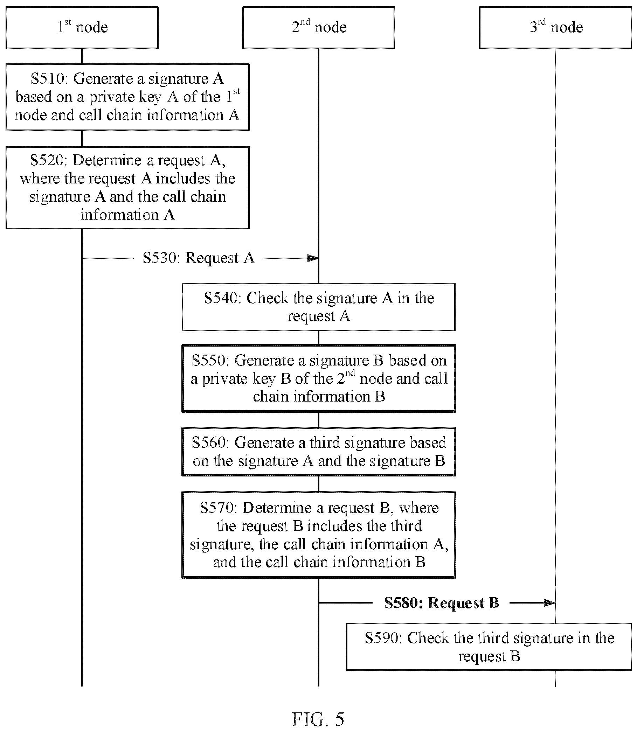

In a possible implementation, the first signature and the second signature are multiplied to obtain the third signature. Alternatively, the first signature and the second signature are integrated based on an elliptic curve to obtain the third signature. The first call chain information is different from second call chain information, the second call chain information indicates related node information of the first information in the first node, and the second request further includes the first call chain information and the second call chain information. A specific explanation is described in detail with reference to FIG. 5.

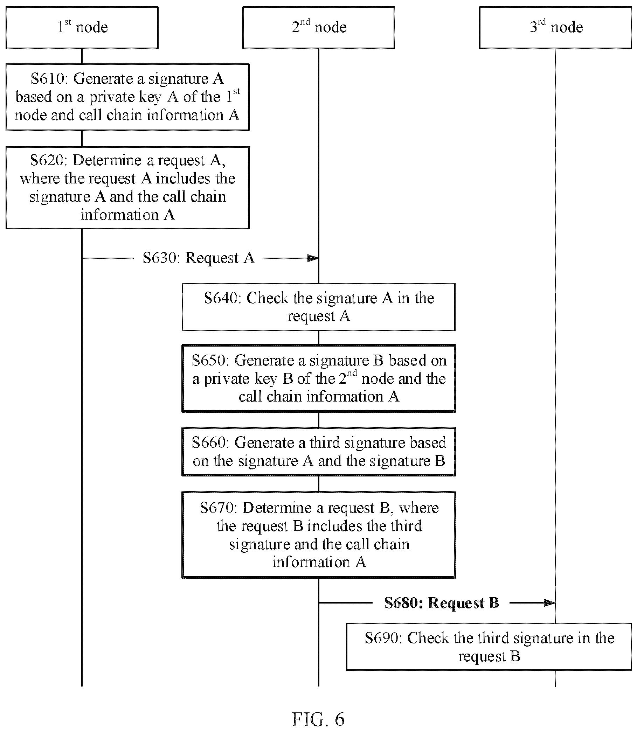

In a possible implementation, the first signature and the second signature are multiplied to obtain the third signature. Alternatively, the first signature and the second signature are integrated based on an elliptic curve to obtain the third signature. The first call chain information is the same as second call chain information, the second call chain information indicates related node information of the first information in the first node, and the second request further includes the first call chain information or the second call chain information. A specific explanation is described in detail with reference to FIG. 6.

In a possible implementation, the first request further includes first control flow information, and the first control flow information includes a running path of a control program of the first node. When the check on the first signature succeeds and check on the first control flow information succeeds, the third signature is determined based on the first signature and the second signature.

S230: The second node sends a second request to the third node, where the second request includes the third signature, and the second request is used to request the first information.

In a possible implementation, the second request may further include the first fresh value.

In a possible implementation, the second request may further include second control flow information, the second control flow information is collected by the second node by using hardware, and the second control flow information includes a running path of a control program of the second node.

S240: The third node checks the third signature.

In a possible implementation, the third signature includes the first signature and the second signature, and signatures in the third signature are checked one by one. A specific explanation is described in detail with reference to FIG. 4.

In a possible implementation, a first public key is obtained, where the first public key includes public keys of the first node and the second node. The third signature is checked based on the first public key, the first call chain information, and second call chain information. The second call chain information indicates related node information of the first information in the first node, and the second request further includes the first call chain information and/or the second call chain information.

When the first call chain information is different from the second call chain information, the second request includes the first call chain information and the second call chain information. A first signature credential is obtained based on the first public key, the first call chain information, and the second call chain information. First to-be-verified information is obtained based on the third signature. Whether the check on the third signature succeeds is determined based on the first signature credential and the first to-be-verified information. A specific explanation is described in detail with reference to FIG. 5.

When the first call chain information is the same as the second call chain information, the second request includes the first call chain information or the second call chain information. A sum of public keys is obtained based on the first public key. A second signature credential is obtained based on the first call chain information or the second call chain information, and the sum of public keys. Second to-be-verified information is obtained based on the third signature. Whether the check on the third signature succeeds is determined based on the second signature credential and the second to-be-verified information. A specific explanation is described in detail with reference to FIG. 6.

In the foregoing technical solution, after receiving a request, the third node, as a downstream node of an intermediate node, checks the third signature obtained based on the first signature and the second signature. In this way, even after the second node is hijacked, when the hijacked second node sends a request to the third node, the request does not include related signature information of the first node. Therefore, because the third node cannot check the related signature information of the first node when checking a signature, the third node does not unconditionally respond to the request of the hijacked second node. In this way, security of data transmission of each node can be further improved, so that security of global chained request transmission is improved.

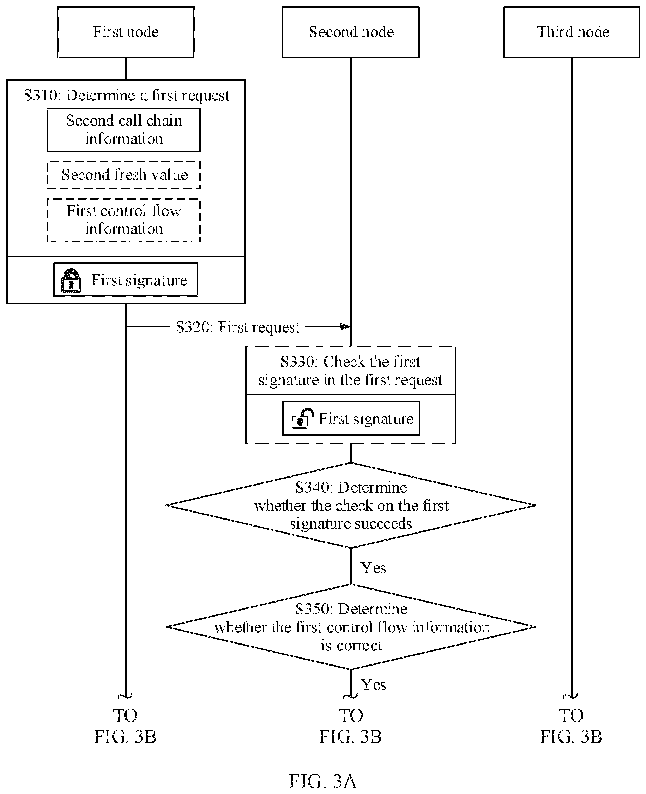

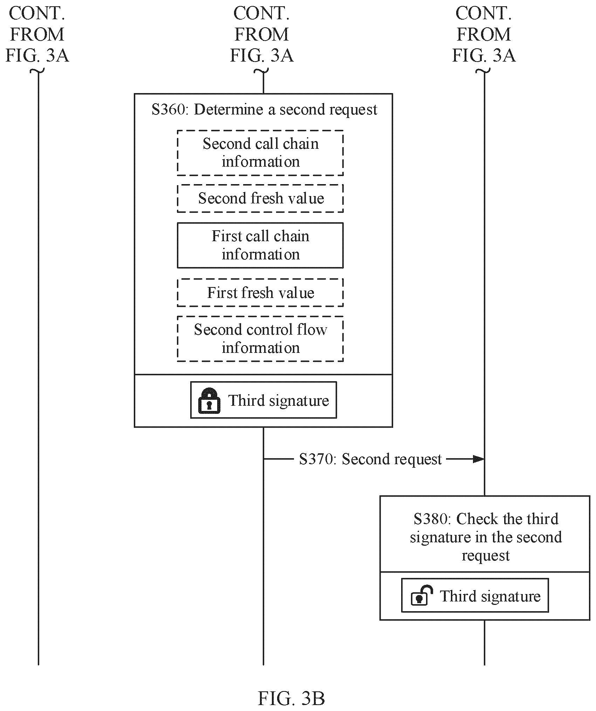

FIG. 3A and FIG. 3B are a diagram of interaction in another communication method according to an embodiment of this application. The communication method shown in FIG. 3A and FIG. 3B is used between a first node, a second node, and a third node. A quantity of nodes called in a chain manner in communication is not limited in this embodiment of this application. The three nodes in the figure are merely examples. Any node with a chained call can use the method shown in FIG. 3A and FIG. 3B. A specific execution body of each node may be an electronic device corresponding to each platform, or may be a chip, a chip system, or a processor that supports an electronic device in implementing a corresponding method, or may be a logical module or software that can implement all or some functions of an electronic device.

It should be understood that, in FIG. 3A and FIG. 3B, the second node is an intermediate node, the first node is an upstream node of the intermediate node, and the third node is a downstream node of the intermediate node. In detailed descriptions in FIG. 3A and FIG. 3B, the first node is described in detail by using an initial node as an example. When the first node is a non-initial node, the first node may also be considered as an intermediate node. For example, in in-vehicle communication, the first node may be the T-Box in FIG. 1, the second node may be the device related to the in-vehicle computing platform in FIG. 1, and the third node may be the gateway in FIG. 1.

S310: The first node determines a first request, where the first request is used to request first information. The first request includes a first signature.

For example, in an in-vehicle communication scenario, the first information may be a remote control service, a remote diagnosis service, or the like. A type of a service specifically requested by using a request is not limited in this embodiment of this application.

In a possible implementation, when the first node is an initial node of a call chain, the first signature may be obtained by the first node by signing second call chain information. The first request may further include the second call chain information.

It should be understood that the second call chain information indicates related node information of the first information in the first node. In other words, the second call chain information indicates call chain information of the first information in the first node.

For example, the second call chain information may indicate a related start node of the first information in the first node. When the first node is the start node, the second call chain information may include first node information, for example, an identity of the first node.

For example, the second call chain information may indicate a call chain from a related start node of the first information in the first node to a downstream node of a current node. When the first node is the start node, the second call chain information includes first node information and second node information, for example, an identity of the first node and an identity of the second node.

When the first node is the initial node of the call chain, the first signature may also be understood as a node signature of the first node.

Specifically, the first node signs the second call chain information by using a private key of the first node, to obtain the first signature.

It should be understood that the private key of the first node may be a private key generated by the first node, or a device-level private key of a platform corresponding to the first node.

Optionally, the first signature in the foregoing manner may alternatively be obtained by the second node by signing the second call chain information and a second fresh value by using a private key of the second node. The first request includes the second call chain information, the second fresh value, and the first signature.

The second fresh value indicates timeliness of the second call chain information. For example, the second fresh value may be generated by the first node in a timestamp check mode, or may be generated in a frame counter check mode.

**In** this way, when the first request includes the second fresh value, spoofing, tampering, and replay of service call information can be effectively prevented, to further improve request security.

Optionally, the first signature in the foregoing manner may alternatively be obtained by the first node by signing the second call chain information, the second fresh value, and the first control flow information by using the private key of the first node. The first request includes the second call chain information, the second fresh value, the first control flow information, and the first signature.

The first control flow information includes a running path of a control program of the first node, that is, the first control flow information indicates a running path of a program corresponding to a control flow graph of the first node. For example, the first node requests running path information of a program of the first information.

S320: The first node sends the first request to the second node, and the second node receives the first request from the first node.

S330: The second node verifies the first signature requested by using a first call request.

In a possible implementation, when the first node is the initial node, the second node checks the first signature based on the public key of the first node and the first request. The public key of the first node may be obtained by the first node in advance.

Specifically, the second node obtains third to-be-verified information based on the public key of the first node and the first signature. The second node obtains a third signature credential based on the second call chain information in the first request, or the second call chain information and the second fresh value, or the second call chain information, the second fresh value, and the first control flow information, and determines, based on the third to-be-verified information and the third signature credential, whether check on the first signature succeeds.

For example, the third signature credential may be a hash value obtained by performing a hash operation on the foregoing information.

S340: Determine whether the check on the first signature succeeds.

In a possible implementation, if the third to-be-verified information is the same as the third signature credential, the check on the first signature succeeds.

In a possible implementation, if the third to-be-verified information is different from the third signature credential, the check on the first signature fails.

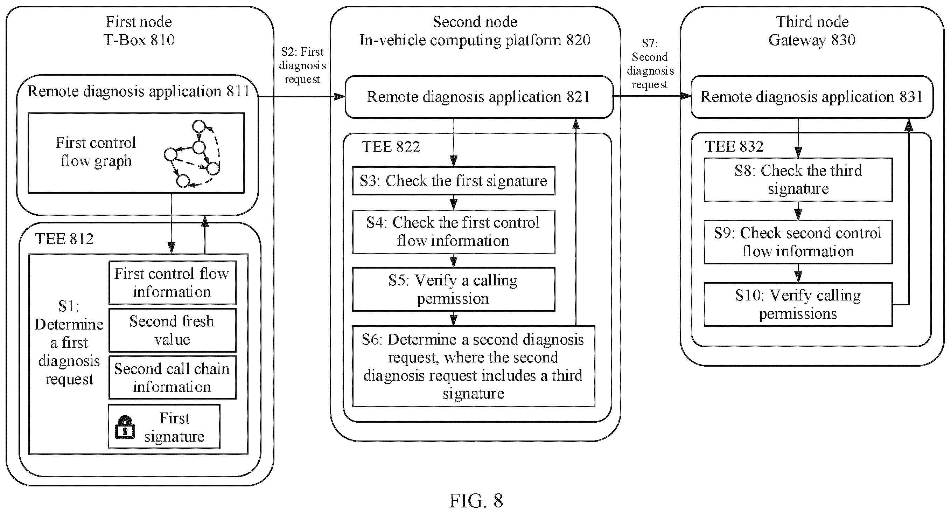

When the check on the first signature succeeds and the first request includes the first control flow information, S350 is performed, that is, the second node checks the first control flow information. A specific process of checking the control flow information is specifically described with reference to FIG. 8.

When the check on the first signature succeeds and the check on the first control flow information succeeds, S360 is performed, that is, the second node determines a second request, where the second request includes a third signature.

In a possible implementation, the second node determines the third signature based on the first signature and a second signature.

The second signature is obtained by signing first call chain information, and the first call chain information indicates related node information of the first information in the second node. The first call chain information is call chain information that is in the first node and that is related to the first information.

For detailed explanations of the first call chain information, refer to S220. Details are not described herein again.

Optionally, the second signature may alternatively be obtained by the second node by signing the first call chain information and a first fresh value.

The first fresh value indicates timeliness of the first call chain information. For a specific manner of generating the first fresh value, refer to the second fresh value. Details are not described herein again.

Optionally, the second signature may be obtained by the second node by signing the first call chain information, the first fresh value, and second control flow information.

The second control flow information includes a running path of a control program of the second node, that is, the second control flow information indicates a running path of a program corresponding to a control flow graph of the second node. For example, the second node requests running path information of a program of the first information. The second control flow information may be collected by the second node by using hardware.

In a possible implementation, the third signature includes the first signature and the second signature.

It should be understood that, in FIG. 3A and FIG. 3B, for example, the first node is the initial node, that is, the third signature includes two pieces of signature information: the first signature and the second signature.

Specifically, a signed object that is signed by the second node by using the private key of the second node may be different from a signed object that is signed by the first node by using the private key of the first node, or a signed object that is signed by the second node by using the private key of the second node may be the same as a signed object that is signed by the first node by using the private key of the first node. That is, in this implementation, signed objects signed by nodes by using respective private keys of the nodes are not limited to be the same or different.

It should be noted that, if the first node is a non-initial node, the first signature includes the node signature of the first node and node signatures of all upstream nodes before the first node. In this case, the third signature includes a plurality of node signatures: the second signature and node signatures of all upstream nodes before the second node.

In a possible implementation, the second node integrates the first signature and the second signature to obtain a single signature as the third signature. The first signature may also be a single signature obtained by the first node by integrating the node signature of the first node and the node signatures of all the nodes before the first node.

In other words, in this implementation, the first signature is a single signature, and the third signature is also a single signature. When the first node in FIG. 3A and FIG. 3B is the initial node, the first signature is the node signature of the first node. When the first node is the non-initial node, the first signature is the single signature obtained by integrating the node signature of the first node and the node signatures of all the nodes before the first node.

It should be understood that the second request further includes the first call chain information and/or the second call chain information. The first call chain information may be different from the second call chain information, or the first call chain information may be the same as the second call chain information. When the first node is the initial node, for related explanations of the second call chain information, refer to S310. When the first node is the non-initial node, the second call chain information includes related call chain information of the first information in the first node and a node before the first node.

For example, when the first node in FIG. 3A and FIG. 3B is the initial node, and the first call chain information is different from the second call chain information, for example, the first call chain information includes identities of the first node, the second node, and the third node, and the second call chain information includes identities of the first node and the second node.

For another example, when the second node in FIG. 3A and FIG. 3B is the initial node, and the first call chain information is the same as the second call chain information, both the first call chain information and the second call chain information include the identity of the first node.

It should be noted that a specific manner of integrating the first signature and the second signature is described in detail in FIG. 5 and FIG. 6.

S370: The second node sends a second request to the third node, and the third node receives the second request from the second node, where the second request includes the third signature.

S380: The third node checks the third signature.

In a possible implementation, the third signature includes the first signature and the second signature, and signatures in the third signature are checked one by one. A more specific implementation is described with reference to FIG. 4.

In a possible implementation, the third signature is the single signature obtained by the second node by integrating the first signature and the second signature, and the third signature is checked based on a first public key, the first call chain information, and the second call chain information.

When the first call chain information is different from the second call chain information, the third node obtains a first signature credential based on the first public key, the first call chain information, and the second call chain information, obtains first to-be-verified information based on the third signature, and determines, based on the first signature credential and the first to-be-verified information, whether the check on the third signature succeeds. A detailed check process is described with reference to FIG. 5.

When the first call chain information is the same as the second call chain information, a sum of public keys is obtained based on the first public key. A second signature credential is obtained based on the sum of public keys, the first call chain information, and the second call chain information. Second to-be-verified information is obtained based on the third signature. Whether the check on the third signature succeeds is determined based on the second signature credential and the second to-be-verified information. A detailed check process is described with reference to FIG. 6.

The first public key includes public keys of the second node and all nodes before the second node. In FIG. 3A and FIG. 3B, the second node is an initial node, and the first public key includes a public key of the first node and a public key of the second node.

Optionally, when the second request includes the second control flow information, after the check on the third signature succeeds, the third node checks whether the second control flow information is correct.

In a possible implementation, when the check on the third signature and the check on the second control information succeed, the third node determines a fifth signature based on the third signature and a fourth signature, where the fourth signature is obtained by signing third call chain information, and the third call chain information indicates related node information of the first information in the third node. The third node sends a third request to a fourth node, where the third request includes the fifth signature, and the third request is used to request the first information.

The third call chain information may also be understood as call chain information that is of the third node and that is related to the first information. More detailed explanations of the third call chain information are similar to those of the first call chain information. For details, refer to the related descriptions of the first call chain information in S220.

In a possible implementation, when the check on the third signature and the check on the second control information succeed, the third node may respond to the first information based on the second request.

For example, the third node may perform an operation indicated by the first information, or the third node may feed back information that needs to be called by a start node corresponding to the first information.

In the foregoing technical solution, the third signature that is checked by the third node, as a downstream node of the intermediate node, after receiving the request is obtained based on the first signature and the second signature. In this way, even after the second node is hijacked, when the hijacked second node sends a request to the third node, the request does not include related signature information of the first node. Therefore, because the third node cannot check the related signature information of the first node when checking a signature, the third node does not unconditionally respond to the request of the hijacked second node. In this way, security of data transmission of each node can be further improved, so that security of global chained call request transmission is improved.

With reference to FIG. 4 to FIG. 6, the following describes in detail a specific manner of checking a signature by each node in a communication method.

FIG. 4 is a diagram of still another communication method according to an embodiment of this application. In FIG. 4, first three nodes in chain transmission are used as an example to describe the method in detail. A 1^{st} node shown in FIG. 4 corresponds to the first node shown in FIG. 3A and FIG. 3B, a 2^{nd} node corresponds to the second node shown in FIG. 3A and FIG. 3B, and a 3^{rd} node corresponds to the third node shown in FIG. 3A and FIG. 3B. It should be understood that for related explanations and descriptions of the 1^{st} node, the 2^{nd} node, and the 3^{rd} node shown in FIG. 4, refer to related descriptions in FIG. 3A and FIG. 3B. Details are not described herein again.

S410: The 1^{st} node generates a signature A based on a private key A of the 1^{st} node and call chain information A.

In a possible implementation, the 1^{st} node signs the call chain information A based on the private key A, to generate the signature A.

It should be understood that the call chain information A indicates related node information of first information in the 1^{st} node, that is, the call chain information A is related call chain information of the first information in the 1^{st} node. For example, the call chain information A indicates that the first information starts from the 1^{st} node. In this case, the call chain information A includes a node identity of the 1^{st} node. Alternatively, the call chain information A indicates that the 1^{st} node requests the first information through the 2^{nd} node, and the call chain information A includes node identities of the 1^{st} node and the 2^{nd} node.

The first information may be an instruction for a specific service. For example, in a remote diagnosis scenario of in-vehicle communication, as shown in FIG. 1, when an ECU in a braking system needs to be diagnosed, the first information may be service call information of a braking signal.

For example, in the remote diagnosis scenario of in-vehicle communication, as shown in FIG. 1, when the ECU in the braking system needs to be diagnosed, a complete call chain is as follows: The 1^{st} node is the T-Box, the 2^{nd} node is the in-vehicle computing platform, the 3^{rd} node is the gateway, a 4^{th} node is the in-vehicle control domain, and a 5^{th} node is the ECU in the braking system. The call chain information A may be a call chain used by the T-Box to call ECU information of the braking system through the in-vehicle computing platform. Alternatively, the call chain information A may indicate that ECU information for calling the braking system that starts from the T-Box node.

Specifically, first, a hash operation is performed on the call chain information A to obtain a hash value A. Then, the hash value A is signed by using the private key A of the 1^{st} node, to obtain the signature A.

Optionally, the signature A may alternatively be obtained by signing the call chain information A and a fresh value A by using the private key A.

The fresh value A indicates timeliness of the call chain information A. The fresh value A may be generated by the 1^{st} node in a timestamp check mode, or may be generated in a frame counter check mode.

Control flow information A is a running path for calling a control program of the 1^{st} node.

S420: The 1^{st} node determines a request A, where the request A includes the signature A and the call chain information A.

Optionally, the request A further includes the fresh value A.

S430: The 1^{st} node sends the request A to the 2^{nd} node, and the 2^{nd} node receives the request A from the 1^{st} node.

S440: The 2^{nd} node checks the signature A in the request A.

In a possible implementation, the signature A is checked based on the public key A of the 1^{st} node and the call chain information A.

Specifically, first, the 2^{nd} node decrypts the signature A by using the public key A of the 1^{st} node, to obtain the hash value A. The 2^{nd} node performs a hash operation on the call chain information A, to obtain a hash value A'. Then, the 2^{nd} node compares the hash value A with the hash value A'. If the hash value A is equal to the hash value A', the check on the signature A succeeds, and the 2^{nd} node may determine that the request A is from the 1^{st} node. If the hash value A is not equal to the hash value A', the check on the signature A fails.

In a possible implementation, the signature A is checked based on the public key A of the 1^{st} node, the call chain information A, and the fresh value A.

A specific process is similar to that in the foregoing possible implementation. In the step of obtaining the hash value A', the 2^{nd} node performs a hash operation on the call chain information A and the fresh value A, to obtain the hash value A'.

It should be understood that the 2^{nd} node obtains the public key A of the 1^{st} node in advance, and learns a signed object of the private key A of the 1^{st} node in advance.

When the check on the signature A succeeds, in S450, the 2^{nd} node generates a signature B based on a private key B of the 2^{nd} node and call chain information B.

In a possible implementation, the 2^{nd} node signs the call chain information B based on the private key B, to generate the signature B.

Specifically, first, a hash operation is performed on the call chain information B to obtain a hash value B. Then, the hash value B is signed by using the private key B of the 2^{nd} node, to obtain the signature B.

Optionally, the 2^{nd} node may further sign the call chain information B and the fresh value B by using the private key B, to generate the signature B.

The fresh value B indicates timeliness of the call chain information B, and a specific obtaining manner is similar to that of the fresh value A. Alternatively, the fresh value B may indicate timeliness of the call chain information A. In this case, the fresh value B is equal to the fresh value A.

The call chain information B may indicate that the 1^{st} node calls a call chain of the 3^{rd} node through the 2^{nd} node, and the call chain information B may include identities of the 1^{st} node, the 2^{nd} node, and the 3^{rd} node.

Alternatively, the call chain information B may indicate that the first information starts from the 1^{st} node, and the call chain information B may include the identity of the 1^{st} node. When the call chain information A also includes the identity of the 1^{st} node, the call chain information A is the same as the call chain information B.

Similarly, in the remote diagnosis scenario of in-vehicle communication, the call chain information B may include identities of the T-Box, the in-vehicle computing platform, and the gateway. Alternatively, the call chain information B further includes an identity of the T-BOX.

It should be noted that, in the method shown in FIG. 4, objects signed by nodes by using private keys may be the same. For example, when the call chain information A is the same as the call chain information B, and the fresh value B is equal to the fresh value A, in this method, objects signed by the 1^{st} node and the 2^{nd} node by using respective private keys are the same. Alternatively, in this method, objects signed by nodes by using respective private keys may be different.

S460: The 2^{nd} node determines a request B, where the request B includes the signature A, the signature B, the call chain information A, and/or the call chain information B.

Optionally, the request B includes the signature A, the signature B, the call chain information A and/or the call chain information B, and the fresh value A and/or the fresh value B.

It should be understood that when the call chain information A is the same as the call chain information B, the request B includes the signature A, the signature B, the call chain information A, and the fresh value A. Alternatively, the request B includes the signature A, the signature B, the call chain information B, and the fresh value B. Because the call chain information A is the same as the call chain information B, the fresh value A is also the same as the fresh value B.

It should be understood that the signature A and the signature B in S460 may be considered as two specific signatures included in the third signature in S360.

S470: The 2^{nd} node sends the request B to the 3^{rd} node, and the 3^{rd} node receives the request B from the 2^{nd} node.

S480: The 3^{rd} node checks the signature A and the signature B in the request B.

In a possible implementation, the 3^{rd} node checks the signature A and the signature B based on the public key A of the 1^{st} node, the public key B of the 2^{nd} node, the call chain information A, and the call chain information B.

Specifically, the 3^{rd} node checks the signature A by using the public key of the 1^{st} node and the call chain information A, and checks the signature B by using the public key of the 2^{nd} node and the call chain information B. For a specific check manner, refer to S440. Details are not described herein again.

Optionally, after the check on the signature A and the check on the signature B succeed, in Manner 1, when the 3^{rd} node is not an end node responding to the first information, a request related to the first information may continue to be transmitted along a chain node until the request is transmitted to the end node responding to the first information. For a manner of checking a signature by a node after the 3^{rd} node, refer to the related method of the 3^{rd} node in the method shown in FIG. 4. For a manner of determining a request by a node after the 3^{rd} node, refer to a related method of the 2^{nd} node in the method shown in FIG. 4.

Optionally, after the check on the signature A and the check on the signature B succeed, in Manner 2, when the 3^{rd} node is an end node responding to the first information, the 3^{rd} node responds to the first information based on the request B.

In the foregoing technical solution, the third signature includes signatures corresponding to a plurality of nodes, so that security of transmitting a global chained call request can be simply and efficiently improved.

The foregoing method may be applicable to a case in which information signed by nodes by using private keys are different or the same. When the information signed by the nodes is different, another check method may be further provided. Details are described in detail with reference to FIG. 5. When the information signed by the nodes is the same, another check method may be further provided. Details are described in detail with reference to FIG. 6.

FIG. 5 is a diagram of yet another communication method according to an embodiment of this application. In FIG. 5, first three nodes in chain transmission are used as an example to describe the method in detail. Similarly, a 1^{st} node shown in FIG. 5 corresponds to the first node shown in FIG. 3A and FIG. 3B, a 2^{nd} node corresponds to the second node shown in FIG. 3A and FIG. 3B, and a 3^{rd} node corresponds to the third node shown in FIG. 3A and FIG. 3B. For related explanations and descriptions of the 1^{st} node, the 2^{nd} node, and the 3^{rd} node shown in FIG. 5, refer to related descriptions in FIG. 3A and FIG. 3B. Details are not described herein again.

S510: The 1^{st} node generates a signature A based on a private key A of the 1^{st} node and call chain information A.

It should be understood that S510 is similar to S410. For related descriptions, refer to S410. Details are not described herein again.

It should be further understood that, in the method shown in FIG. 5, the call chain information A indicates the 1^{st} node to request, in the 1^{st} node, call chain information of the first information through the 2^{nd} node, and the call chain information A includes identities of the 1^{st} node and the 2^{nd} node.

S520: The 1^{st} node determines a request A, where the request A includes the signature A and the call chain information A.

Optionally, the request A further includes the fresh value A.

S530: The 1^{st} node sends the request A to the 2^{nd} node, and the 2^{nd} node receives the request A from the 1^{st} node.

S540: The 2^{nd} node checks the signature A in the request A.

It should be understood that a manner for checking the signature A in S540 is similar to that in S440. For details, refer to S440. Details are not described herein again.

When the check on the signature A succeeds, in S550, the 2^{nd} node generates a signature B based on a private key B of the 2^{nd} node and call chain information B.

It should be understood that a manner for checking the signature A in S540 is similar to that in S450. For details, refer to S450. Details are not described herein again. A manner for generating the signature B in S550 is similar to that in S450. Refer to S450. Details are not described herein again.

It should be noted that, in the method shown in FIG. 5, objects signed by nodes by using private keys are different, that is, objects of a hash operation are different. The call chain information B is related call chain information of the first information in the 2^{nd} node. For example, the call chain information B indicates the 2^{nd} node to request, from the 3^{rd} node, the call chain information of the first information corresponding to the 1^{st} node, and the call chain information B includes identities of the 1^{st} node, the 2^{nd} node, and the 3^{rd} node.

In other words, in the method shown in FIG. 5, the call chain information A is different from the call chain information B.

S560: The 2^{nd} node generates a third signature based on the signature A and the signature B.

In a possible implementation, the signature A and the signature B are integrated to obtain the third signature. A specific integration manner may be multiplying the signature A and the signature B. Alternatively, the signature A and the signature B are integrated based on an EdDSA of an elliptic curve Ed25519, to obtain the third signature. In this embodiment of this application, integration of node signatures of nodes is not limited.

S570: The 2^{nd} node determines a request B, where the request B includes the third signature, the call chain information A, and the call chain information B.

Optionally, the request B includes the third signature, the call chain information A, the fresh value A, the call chain information B, and the fresh value B.

S580: The 2^{nd} node sends the request B to the 3^{rd} node, and the 3^{rd} node receives the request B from the 2^{nd} node.

S590: The 3^{rd} node checks the third signature in the request B.

In a possible implementation, the 3^{rd} node checks the third signature based on the public key A of the 1^{st} node, the public key B of the 2^{nd} node, the call chain information A, and the call chain information B.

Specifically, the 3^{rd} node generates a signature credential A based on the public key A and the call chain information A, generates a signature credential B based on the public key B and the call chain information B, and uses a sum of the signature credential A and the signature credential B as a first signature credential. The 3^{rd} node obtains first to-be-verified information based on the third signature, and checks the third signature based on the first signature credential and the first to-be-verified information.

For example, when the first signature credential is the same as the first to-be-verified information, the check on the third signature succeeds. When the first signature credential is different from the first to-be-verified information, the check on the third signature fails.

Optionally, after the check on the third signature succeeds, in Manner 1, when the 3^{rd} node is not an end node responding to the first information, a request related to the first information may continue to be transmitted along a chain node until the request is transmitted to the end node responding to the first information. For a manner of checking a signature by a node after the 3^{rd} node, refer to the related method of the 3^{rd} node in the method shown in FIG. 5. For a manner of determining a request by a node after the 3^{rd} node, refer to a related method of the 2^{nd} node in the method shown in FIG. 5.

Optionally, after the check on the third signature succeeds, in Manner 2, when the 3^{rd} node is an end node responding to the first information, the 3^{rd} node responds to the first information based on the request B.

In the foregoing technical solution, a signature in a request is a single signature obtained by integrating signatures corresponding to a plurality of nodes. This improves security of global chained request transmission, and further saves a transmission bandwidth of the request.

FIG. 6 is a diagram of a communication method according to an embodiment of this application. In FIG. 6, first three nodes in chain transmission are used as an example to describe the method in detail. It should be understood that similarly, a 1^{st} node shown in FIG. 6 corresponds to the first node shown in FIG. 3A and FIG. 3B, a 2^{nd} node corresponds to the second node shown in FIG. 3A and FIG. 3B, and a 3^{rd} node corresponds to the third node shown in FIG. 3A and FIG. 3B. For related explanations and descriptions of the 1^{st} node, the 2^{nd} node, and the 3^{rd} node shown in FIG. 6, refer to related descriptions in FIG. 3A and FIG. 3B. Details are not described herein again.

S610: The 1^{st} node generates a signature A based on a private key A of the 1^{st} node and call chain information A.

It should be understood that S610 is similar to S410. For related descriptions, refer to S410. Details are not described herein again.

It should be further understood that, in the method shown in FIG. 6, the call chain information A may indicate that a node related to first information is the 1^{st} node. In other words, the call chain information A indicates that a start node of a call chain of the first information is the 1^{st} node. The call chain information A includes an identity of the 1^{st} node.

S620: The 1^{st} node determines a request A, where the request A includes the signature A and the call chain information A.

Optionally, the request A further includes a fresh value A.

S630: The 1^{st} node sends the request A to the 2^{nd} node, and the 2^{nd} node receives the request A from the 1^{st} node.

S640: The 2^{nd} node checks the signature A in the request A.

It should be understood that a manner for checking the signature A in S640 is similar to that in S440. For details, refer to S440. Details are not described herein again.

When the check on the signature A succeeds, in S650, the 2^{nd} node generates a signature B based on a private key B of the 2^{nd} node and call chain information A.

In a possible implementation, the 2^{nd} node signs the call chain information A based on the private key B, to generate the signature B.

Specifically, the 2^{nd} node may perform a hash operation on the call chain information A to obtain a hash value A, and then sign the hash value A by using the private key B of the 2^{nd} node, to obtain the signature B. Alternatively, because the 2^{nd} node successfully checks the signature A, the 2^{nd} node may decrypt, by using a public key of the 1^{st} node, the signature A to obtain a hash value A', and then sign the hash value A' by using the private key B of the 2^{nd} node, to obtain the signature B, where the hash value A is equal to the hash value A'.

It should be noted that, in the method shown in FIG. 6, objects signed by nodes by using private keys are the same, that is, objects of a hash operation are the same. A signed object of the private key A of the 1^{st} node is the same as a signed object of the private key B of the 2^{nd} node, and both may be the call chain information A, or both may be the call chain information A and the fresh value A.

S660: The 2^{nd} node generates a third signature based on the signature A and the signature B.

In a possible implementation, the signature A and the signature B are integrated to obtain the third signature. A specific integration manner may be multiplying the signature A and the signature B. Alternatively, the signature A and the signature B are integrated based on an EdDSA of an elliptic curve Ed25519, to obtain the third signature. In this embodiment of this application, integration of node signatures of nodes is not limited.

S670: The 2^{nd} node determines a request B, where the request B includes the third signature and the call chain information A.

Optionally, the request B includes the third signature, the call chain information A, and the fresh value A.

S680: The 2^{nd} node sends the request B to the 3^{rd} node, and the 3^{rd} node receives the request B from the 2^{nd} node.

S690: The 3^{rd} node checks the third signature in the request B.

In a possible implementation, the 3^{rd} node checks the third signature based on the public key A of the 1^{st} node, the public key A of the 2^{nd} node, and the call chain information A.

Specifically, the 3^{rd} node uses a sum of the public key A and the public key B as a sum of public keys, obtains a second signature credential based on the sum of public keys and the call chain information A, obtains second to-be-verified information based on the third signature, and checks the third signature based on a first signature credential and first to-be-verified information.

For example, when the second signature credential is the same as the second to-be-verified information, the check on the third signature succeeds. When the second signature credential is different from the second to-be-verified information, the check on the third signature fails.

Optionally, after the check on the third signature succeeds, in Manner 1, when the 3^{rd} node is not an end node responding to the first information, a request related to the first information may continue to be transmitted along a chain node until the request is transmitted to the end node responding to the first information. For a manner of checking a signature by a node after the 3^{rd} node, refer to the related method of the 3^{rd} node in the method shown in FIG. 6. For a manner of determining a request by a node after the 3^{rd} node, refer to a related method of the 2^{nd} node in the method shown in FIG. 6.

Optionally, after the check on the third signature succeeds, in Manner 2, when the 3^{rd} node is an end node responding to the first information, the 3^{rd} node responds to the first information based on the request B.

In the foregoing technical solution, signed objects generated by nodes are the same, and a signature in a request transmitted between nodes is a single signature obtained by integrating signatures corresponding to a plurality of nodes. This improves security of global chain request transmission, saves a transmission bandwidth of the request, and saves computing power.

There are two possible implementations for a private key and a public key of each node.

In a first manner, each node has its own public-private key pair. For example, the public-private key pair shown in FIG. 4 to FIG. 6 belongs to this case.

In a second manner, a device corresponding to each node has a device-level public-private key pair, and each node may generate a pre-shared key (pre-shared key, PSK) based on the device-level public-private key pair, and then generate a service-level key based on the PSK. Service-level keys of all nodes are the same. Then, integrity protection of a call chain is implemented by using a message authentication code (message authentication code, MAC), that is, the first information is encrypted by using the same service-level key of each node. The message authentication code may be obtained by using a message authentication code algorithm like a hash-based message authentication code (hash-based message authentication code, HMAC) or a cipher block chaining-message authentication code (cipher block chaining-message authentication code, CMAC). This is not limited in this application. Finally, to implement authentication of the identities of the 1^{st} node and the 2^{nd} node by the 3^{rd} node shown in FIG. 4 to FIG. 6, a node on each call chain may sign a message authentication code MAC by using a device-level private key. For a specific signature manner, refer to FIG. 4 to FIG. 6.

In this way, on the basis of the device-level public-private key pair, each node does not need to generate an independent public-private key pair, and the same service-level key can simplify generation and check of the message authentication code. This can reduce a requirement for a secure storage capability of the device corresponding to each node.

In the foregoing technical solution, after receiving a request, the third node, as a downstream node of an intermediate node, checks the third signature determined based on the first signature and the second signature. In this case, the second fresh value in the first request can effectively prevent spoofing, tampering, and replay of the first request. Even if the second node (namely, the intermediate node in the call chain) of the call chain is hijacked, when the hijacked second node sends the second request to the third node, the third node cannot check the signature of the first node. Therefore, according to the solution in this embodiment of this application, an attack on the intermediate node can be detected in time, and an attack on the intermediate node can be prevented from spreading to a lower-level node.

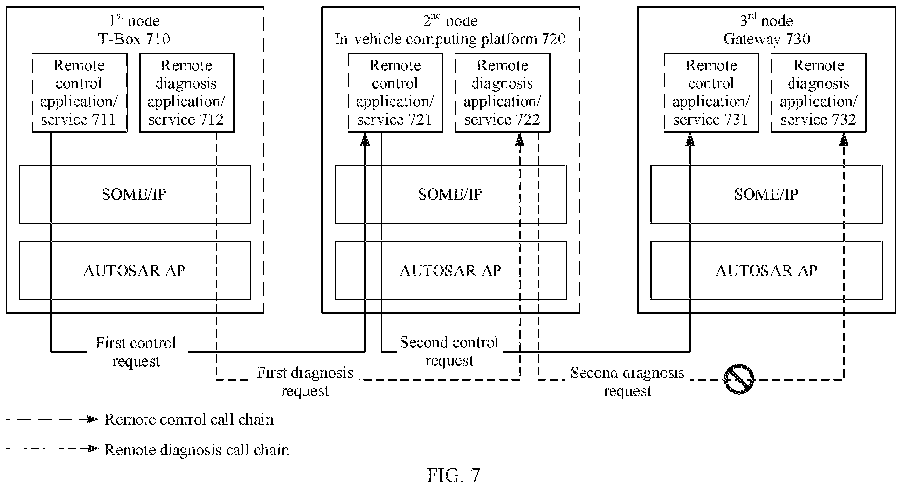

In-vehicle communication is used as an example. FIG. 7 is a diagram of an in-vehicle call chain according to an embodiment of this application.

As shown in FIG. 7, a 1^{st} node of an in-vehicle call chain node may be a T-Box 710, a 2^{nd} node may be an in-vehicle computing platform 720, and a 3^{rd} node may be a gateway 730. A specific gateway type may be a distributed gateway. The three nodes are used as an example to implement remote control and remote diagnosis of an intelligent connected vehicle. The solution in this embodiment of this application may also be applicable to another call chain. In this application, only a remote control service/application and a remote diagnosis service/application are used as an example to describe in detail the communication method.

A solid-line call chain shown in FIG. 7 is a remote control call chain, and a dashed-line call chain is a remote diagnosis call chain. The following separately uses the remote control call chain and the remote diagnosis call chain to describe a process of checking call chain integrity of an intermediate node.

It should be understood that a remote control application/service and a remote diagnosis application/service of each node shown in FIG. 7 are software modules of each node.

For example, first information requested by a remote control application/service 711 may be first control information. For example, the first control information indicates a control service module or a control application module corresponding to an end node to perform a corresponding operation, or the first control information indicates to obtain information from a control service module or an application control module corresponding to an end node. Specific steps for checking integrity of the remote control call chain are as follows.

Step 1: The remote control application/service 711 in the T-Box 710 receives a remote control signal from the outside of a vehicle through 4G/5G.

Step 2: The remote control application/service 711 determines a first control request based on the remote signal, and sends the first control request to the remote control application/service 721 on the in-vehicle computing platform 720 through an AUTOSAR adaptive platform (automotive open system architecture adaptive platform, AUTOSAR AP) based on a vehicle-mounted Ethernet protocol COME/IP. For details about determining the first control request, refer to a manner for determining the request A of the 1^{st} node in FIG. 4 to FIG. 6.

Step 3: The remote control application/service 721 checks a first signature in the first control request. For a specific check manner, refer to the check manner of the 2^{nd} node in FIG. 4 to FIG. 6. After the check succeeds, the remote control application/service 721 determines a second control request, and sends the second control request to the remote control application/service 731 in the gateway 730 through the AUTOSAR AP based on the vehicle-mounted Ethernet protocol COME/IP. The second control request includes a third signature, and the third signature indicates signatures of the T-Box and the in-vehicle computing platform. For a specific manner for generating the third signature, refer to a manner for generating the third signature of the 2^{nd} node in FIG. 4 to FIG. 6.

Step 4: The remote control application/service 731 checks the third signature in the second control request. For a specific check manner, refer to the check manner of the 3^{rd} node in FIG. 4 to FIG. 6. If the check succeeds, the remote control application/service 731 may determine a new request, and send the request to a next node. A signature included in the new request indicates node signatures respectively generated by the T-Box 710, the in-vehicle computing platform 720, and the gateway 730. Alternatively, if the check succeeds, the remote control application/service 731 may further respond to the first control service based on the second control request.

For another example, the first information requested by the remote diagnosis application/service 712 may be first diagnosis information. The procedure for checking integrity of the remote diagnosis call chain is similar to the foregoing procedure for checking integrity of the remote diagnosis call chain. With reference to FIG. 7, the following specifically describes a specific process in which security can be effectively improved by using the communication method in this application after the in-vehicle computing platform 720 in the 2^{nd} node is hijacked.

After the in-vehicle computing platform 720 of the 2^{nd} node is hijacked, the remote control application/service 722 of the in-vehicle computing platform 720 sends a second diagnosis request to the remote control application/service 732 of the gateway 730. When the remote control application/service 732 of the gateway 730 checks the third signature in the second diagnosis request, because the third signature cannot indicate the signature of the T-Box, the check of the third signature fails, and a request for diagnosis information in the second diagnosis request is not allowed, as shown in FIG. 7.

The following describes in detail a process of checking local control flow information in in-vehicle communication with reference to FIG. 8.

FIG. 8 is a diagram of a security check method 800 for an in-vehicle remote diagnosis call chain according to an embodiment of this application.

FIG. 8 is described by using an example in which a 1^{st} node is a T-Box 810, a 2^{nd} node is an in-vehicle computing platform 820, and a 3^{rd} node is a gateway 830. A predefined call chain is that the T-Box 810 requests remote diagnosis information of the gateway 830 through the in-vehicle computing platform 820.

S1: The T-Box 810 determines a first diagnosis request in a trusted execution environment (trusted execution environment, TEE) 812.

The first diagnosis request includes first control flow information, a second fresh value, second call chain information, and a first signature.

The first control flow information may be collected based on hardware of the T-Box, and the first control flow information indicates a running path of a program corresponding to a first control flow graph of the T-Box.

In this way, the first control flow information is directly collected by using specific hardware of a node, and a software module does not need to collect the first control flow information. This can reduce a delay.

For related explanations of the second fresh value and the second call chain information, refer to S310. Details are not described herein again.

For example, the first signature may be obtained by the T-Box 810 by signing the first control flow information, the first fresh value, and the first call chain information in the TEE 812 by using a private key of the T-Box. The first signature may be the signature A shown in FIG. 4 to FIG. 6. For a more specific implementation, refer to FIG. 4 to FIG. 6.

S2: A remote diagnosis application 811 of the T-Box 810 sends the first diagnosis request to a remote diagnosis application 821 of the in-vehicle computing platform 820.

For example, the remote diagnosis application 811 of the T-Box 810 may send the first diagnosis request to the remote diagnosis application 821 of the in-vehicle computing platform 820 through an in-vehicle Ethernet (for example, COME/IP).

S3: The in-vehicle computing platform 820 checks the first signature in the TEE 822.

It should be understood that the first signature may be the signature A shown in FIG. 4 to FIG. 6. For a more specific implementation, refer to a manner, in FIG. 4 to FIG. 6, in which the 2^{nd} node checks the signature A.

After the check of the first signature succeeds, in S4, the in-vehicle computing platform 820 checks the first control flow information in the TEE 822.

It should be understood that the in-vehicle computing platform 820 obtains the first control flow graph of the T-Box 810 in advance.

For example, the in-vehicle computing platform 820 obtains first check control flow information based on the first control flow graph obtained in advance, and then determines, by comparing the first control flow information with the first check control flow information, whether the check of the first control flow information succeeds.

In this way, control flow information of an upstream node is added to the first request, so that a program code reuse attack, for example, return-oriented programming ROP or jump-oriented programming JOP, can be effectively prevented and discovered.

When the check on the first control flow information succeeds, in S5, the in-vehicle computing platform 820 verifies a calling permission of the T-Box 810 in the TEE 822.

In a possible implementation, the in-vehicle computing platform 820 verifies the calling permission of the T-Box 810 in the TEE 822 through an identity and access management (identity and access management, IAM) module.

When the verification on the calling permission of the T-Box succeeds, in S6, the in-vehicle computing platform 820 determines a second diagnosis request in the TEE 822, where the second diagnosis request includes a third signature, and the third signature indicates a signature of the T-Box and a signature of the in-vehicle computing platform.

The second diagnosis request further includes a first fresh value, the second call chain information, the second fresh value, and first call chain information. Alternatively, the second diagnosis request further includes the second fresh value and the second call chain information. For detailed descriptions of the second fresh value, the second call chain information, the first fresh value, and the first call chain information, refer to FIG. 3A and FIG. 3B.

The second diagnosis request includes second control flow information, the second control flow information may be collected based on hardware of the in-vehicle computing platform, and the second control flow information indicates a running path of a program corresponding to a second control flow graph of the in-vehicle computing platform.

S7: The remote diagnosis application 821 of the in-vehicle computing platform 820 sends the second diagnosis request to a remote diagnosis application 831 of the gateway 830.

For example, the remote diagnosis application 821 of the in-vehicle computing platform 820 may send the second diagnosis request to the remote diagnosis application 831 of the gateway 830 through the in-vehicle Ethernet (for example, COME/IP).

S8: The gateway 830 checks the third signature in the TEE 832.

It should be understood that the third signature may be the signature A and the signature B shown in FIG. 4, or the third signature may be a specific implementation in FIG. 5 and FIG. 6. For details, refer to FIG. 4 to FIG. 6.

After the check on the third signature succeeds, in S9, the gateway 830 checks the second control flow information in the TEE 832.

For a specific manner for checking the second control flow information, refer to the manner for checking the first control flow information in S3.

When the check on the second control flow information succeeds, in S10, the gateway 830 verifies, in the TEE 832, calling permissions of the T-Box 810 and the in-vehicle computing platform 820.

In a possible implementation, the gateway 830 verifies, in the TEE 832, the calling permissions of the T-Box 810 and the in-vehicle computing platform 820 through the IAM module.

Optionally, after the verification on the calling permission succeeds, when the gateway 830 is not an end node corresponding to remote diagnosis information, a diagnosis request related to the remote diagnosis information may continue to be transmitted along a chain node until the diagnosis request is transmitted to the end node responding to the remote diagnosis information.

Optionally, after the verification on the calling permission succeeds, when the gateway 830 is an end node corresponding to diagnosis information, the gateway 830 responds to the remote diagnosis information based on the second diagnosis request.

The foregoing content is of the communication method according to embodiments of this application. The following describes a node in detail with reference to FIG. 14 and FIG. 15. It should be understood that descriptions of the apparatus embodiments correspond to the descriptions of the method embodiments. Therefore, for content that is not described in detail, refer to the foregoing method embodiments. For brevity, details are not described herein again.

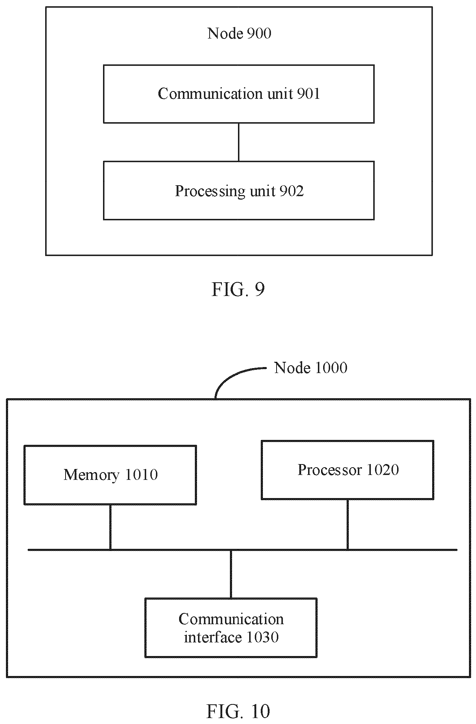

FIG. 9 is a diagram of a node according to an embodiment of this application. The node 900 includes a communication unit 901 and a processing module 902.

When the node 900 is an intermediate node, namely, a second node, the communication unit 901 is configured to receive a first request from a first node, where the first request is used to request first information, the first information is information related to a start node, and the first request includes a first signature.

The processing unit 902 is configured to: when check on the first signature succeeds, determine a third signature based on the first signature and a second signature, where the second signature is obtained by signing first call chain information, the first call chain information indicates related node information of the first information in the second node, and the first call chain information includes start node information.

The communication unit 901 is configured to send a second request to a third node, where the second request includes the third signature, and the second request is used to request the first information.

When the node 900 is a downstream node of an intermediate node, namely, a third node, the communication unit 901 is configured to receive a second request from the second node, where the second request includes a third signature, the second request is used to request the first information, and the first information is information related to a start node.

The processing unit 902 is configured to check the third signature, where the third signature is determined by the second node based on a first signature and a second signature, the first signature is from a first request of a first node, the second signature is obtained by the second node by signing first call chain information, the first call chain information indicates related node information of the first information in the second node, and the first call chain information includes start node information.

It should be understood that the foregoing content is merely an example description, and the node is configured to perform the methods or steps in the foregoing method embodiments. Therefore, the node corresponds to the foregoing method embodiments. For specific content, refer to the descriptions in the foregoing method embodiments. Details are not described herein again.

FIG. 10 is a diagram of a hardware structure of a node according to an embodiment of this application. The node 1000 shown in FIG. 10 may include a memory 1010, a processor 1020, and a communications interface 1030. The memory 1010, the processor 1020, and the communications interface 1030 are connected through an internal connection path. The memory 1010 is configured to store instructions. The processor 1020 is configured to execute the instructions stored in the memory 1020, to control the input/output interface 1030 to receive/send at least some parameters of a second channel model. Optionally, the memory 1010 may be coupled to the processor 1020 through an interface, or may be integrated with the processor 1020.

It should be noted that the communications interface 1030 implements communication between the communication device 1000 and another device or a communications network by using, for example but not limited to, a transceiver apparatus such as a transceiver. The communications interface 1030 may further include an input/output interface (input/output interface).

In an implementation process, steps in the foregoing methods can be implemented by using a hardware integrated logic circuit in the processor 1020, or by using instructions in a form of software. The method of the communication disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory 1010, and the processor 1020 reads information in the memory 1010, and completes the steps in the foregoing methods in combination with hardware of the processor. To avoid repetition, details are not described herein again.

It should be understood that, the processor in embodiments of this application may be a central processing unit CPU. The processor may be further another general-purpose processor, a digital signal processor DSP, an application-specific integrated circuit ASIC, a field programmable gate array FPGA or another programmable logic device, a discrete gate or transistor logic device, a discrete hardware component, or the like. The general-purpose processor may be a microprocessor, or the processor may be any conventional processor or the like.

It should also be understood that in embodiments of this application, the memory may include a read-only memory and a random access memory, and provide an instruction and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

An embodiment of this application further provides a node. The node includes a processing unit and a storage unit. The storage unit is configured to store instructions, and the processing unit executes the instructions stored in the storage unit, so that the node performs the foregoing communication method.

An embodiment of this application further provides a moving carrier, including the node 900 or the node 1000. The moving carrier may be a vehicle.

An embodiment of this application further provides a computer-readable medium, where the computer-readable medium stores program code. When the computer program code is run on a computer, the computer is enabled to perform any one of the methods in FIG. 2 to FIG. 8.

An embodiment of this application further provides a computer program product. The computer program product includes computer program code, and when the computer program code is run on a computer, the computer is enabled to perform the method.

An embodiment of this application further provides a chip, including at least one processor and a memory. The at least one processor is coupled to the memory, and is configured to read and execute instructions in the memory, to perform any one of the methods in FIG. 2 to FIG. 8.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a second node, and the method comprises:
receiving a first request from a first node, wherein the first request is used to request first information, the first information is information related to a start node, and the first request comprises a first signature;
determining, based on the first signature and a second signature, a third signature when check on the first signature succeeds, wherein the second signature is obtained by signing first call chain information, the first call chain information indicates related node information of the first information in the second node, and the first call chain information comprises start node information; and
sending a second request to a third node, wherein the second request comprises the third signature, and the second request is used to request the first information.

2. The method according to claim 1, wherein the third signature comprises the first signature and the second signature.

3. The method according to claim 1, wherein determining, based on the first signature and the second signature, the third signature comprises:
multiplying the first signature and the second signature to obtain the third signature; or
integrating the first signature and the second signature based on an elliptic curve, to obtain the third signature, wherein
the first call chain information is different from second call chain information, the second call chain information indicates related node information of the first information in the first node, and the second request further comprises the first call chain information and the second call chain information.

4. The method according to claim 1, wherein determining, based on the first signature and the second signature, the third signature comprises:
multiplying the first signature and the second signature to obtain the third signature; or
integrating the first signature and the second signature based on an elliptic curve, to obtain the third signature, wherein
the first call chain information is the same as second call chain information, the second call chain information indicates related node information of the first information in the first node, and the second request further comprises the first call chain information or the second call chain information.

5. The method according to any one of claims 1 to 4, wherein the second request further comprises a first fresh value, the first fresh value indicates timeliness of the first call chain information, and the second signature is obtained by signing the first call chain information and the first fresh value.

6. The method according to any one of claims 1 to 5, wherein the first request further comprises first control flow information, and the first control flow information comprises a running path of a control program of the first node; and
determining, based on the first signature and the second signature, the third signature when the check on the first signature succeeds comprises:
when the check on the first signature succeeds and check on the first control flow information succeeds, determining the third signature based on the first signature and the second signature.

7. The method according to claim 6, wherein the method further comprises:
collecting second control flow information of the second node by using hardware, wherein the second control flow information comprises a running path of a control program of the second node, and the second request further comprises the second control flow information.

8. A communication method, wherein the method is applied to a third node, and the method comprises:
receiving a second request from a second node, wherein the second request comprises a third signature, the second request is used to request first information, and the first information is information related to a start node; and
checking the third signature, wherein the third signature is determined by the second node based on a first signature and a second signature, the first signature is from a first request of a first node, the second signature is obtained by the second node by signing first call chain information, the first call chain information indicates related node information of the first information in the second node, and the first call chain information comprises start node information.

9. The method according to claim 8, wherein the third signature comprises the first signature and the second signature; and
checking the third signature comprises:
checking the signatures in the third signature one by one.

10. The method according to claim 8, wherein the third signature is obtained by the second node by multiplying the first signature and the second signature, or is obtained by integrating the first signature and the second signature based on an elliptic curve; and the method further comprises:
obtaining a first public key, wherein the first public key comprises public keys of the second node and a node before the second node; and
checking the third signature comprises:
checking the third signature based on the first public key, the first call chain information, and second call chain information, wherein
the second call chain information indicates related node information of the first information in the first node, and the second request further comprises the first call chain information and/or the second call chain information.

11. The method according to claim 10, wherein when the first call chain information is different from the second call chain information, the second request comprises the first call chain information and the second call chain information, and checking the third signature based on the first public key, the first call chain information, and the second call chain information comprises:
obtaining a first signature credential based on the first public key, the first call chain information, and the second call chain information;
obtaining first to-be-verified information based on the third signature; and
determining, based on the first signature credential and the first to-be-verified information, whether the check on the third signature succeeds.

12. The method according to claim 10, wherein when the first call chain information is the same as the second call chain information, the second request comprises the first call chain information or the second call chain information, and checking the third signature based on the first public key, the first call chain information, and the second call chain information comprises:
obtaining a sum of public keys based on the first public key;
obtaining a second signature credential based on the first call chain information or the second call chain information, and the sum of public keys;
obtaining second to-be-verified information based on the third signature; and
determining, based on the second signature credential and the second to-be-verified information, whether the check on the third signature succeeds.

13. The method according to any one of claims 8 to 12, wherein the second request further comprises a first fresh value, the first fresh value indicates timeliness of the first call chain information, and the second signature is obtained by signing the first call chain information and the first fresh value.

14. The method according to any one of claims 8 to 13, wherein the second request further comprises second control flow information, and the second control flow information indicates a running path of a control program of the second node; and
when the check on the third signature succeeds, the method further comprises:
checking whether the second control flow information is correct.

15. The method according to any one of claims 8 to 14, wherein when the check on the third signature succeeds and the check on the second control flow information succeeds, the method further comprises:
determining a fifth signature based on the third signature and a fourth signature, wherein the fourth signature is obtained by the third node by signing third call chain information, and the third call chain information indicates related node information of the first information in the third node; and
sending a third request to a fourth node, wherein the third request comprises the fifth signature, and the third request is used to request the first information.

16. The method according to any one of claims 8 to 14, wherein when the check on the third signature succeeds and the check on the second control flow information succeeds,
the method further comprises:
responding to the first information based on the second request.

17. A node, comprising a communication unit and a processing unit, wherein
the communication unit is configured to receive a first request from a first node, wherein the first request is used to request first information, the first information is information related to a start node, and the first request comprises a first signature;
when check on the first signature succeeds, the processing unit is configured to determine a third signature based on the first signature and a second signature, wherein the second signature is obtained by signing first call chain information, the first call chain information indicates related node information of the first information in a second node, and the first call chain information comprises start node information; and
the communication unit is further configured to send a second request to a third node, wherein the second request comprises the third signature, and the second request is used to request the first information.

18. The node according to claim 17, wherein the third signature comprises the first signature and the second signature.

19. The node according to claim 17, wherein the processing unit is specifically configured to:
multiply the first signature and the second signature to obtain the third signature; or
integrate the first signature and the second signature based on an elliptic curve, to obtain the third signature, wherein
the first call chain information is different from second call chain information, the second call chain information indicates related node information of the first information in the first node, and the second request further comprises the first call chain information and the second call chain information.

20. The node according to claim 17, wherein the processing unit is specifically configured to:
multiply the first signature and the second signature to obtain the third signature; or
integrate the first signature and the second signature based on an elliptic curve, to obtain the third signature, wherein
the first call chain information is the same as second call chain information, the second call chain information indicates related node information of the first information in the first node, and the second request further comprises the first call chain information or the second call chain information.

21. The node according to any one of claims 17 to 20, wherein the second request further comprises a first fresh value, the first fresh value indicates timeliness of the first call chain information, and the second signature is obtained by signing the first call chain information and the first fresh value.

22. The node according to any one of claims 17 to 21, wherein the first request further comprises first control flow information, and the first control flow information comprises a running path of a control program of the first node; and
when the check on the first signature succeeds, the processing unit is specifically configured to:
when the check on the first signature succeeds and check on the first control flow information succeeds, determine, by the second node, the third signature based on the first signature and the second signature.

23. The node according to claim 22, wherein the processing unit is further configured to:
collect second control flow information of the second node by using hardware, wherein the second control flow information comprises a running path of a control program of the second node, and the second request further comprises the second control flow information.

24. A node, comprising a communication unit and a processing unit, wherein
the communication unit is configured to receive a second request from a second node, wherein the second request comprises a third signature, the second request is used to request first information, and the first information is information related to a start node; and
the processing unit is configured to check the third signature, wherein the third signature is determined by the second node based on a first signature and a second signature, the first signature is from a first request of a first node, the second signature is obtained by the second node by signing first call chain information, the first call chain information indicates related node information of the first information in the second node, and the first call chain information comprises start node information.

25. The node according to claim 24, wherein the third signature comprises the first signature and the second signature; and
the processing unit is specifically configured to:
check the signatures in the third signature one by one.

26. The node according to claim 24, wherein the third signature is obtained by the second node by multiplying the first signature and the second signature, or is obtained by integrating the first signature and the second signature based on an elliptic curve; and
the node further comprises an obtaining unit, wherein
the obtaining unit is configured to obtain a first public key, wherein the first public key comprises public keys of the second node and a node before the second node; and
the processing unit is specifically configured to:
check the third signature based on the first public key, the first call chain information, and second call chain information, wherein
the second call chain information indicates related node information of the first information in the first node, and the second request further comprises the first call chain information and/or the second call chain information.

27. The node according to claim 26, wherein when the first call chain information is different from the second call chain information, the second request comprises the first call chain information and the second call chain information, and the processing unit is specifically configured to:
obtain a first signature credential based on the first public key, the first call chain information, and the second call chain information;
obtain first to-be-verified information based on the third signature; and
determine, based on the first signature credential and the first to-be-verified information, whether the check on the third signature succeeds.

28. The node according to claim 26, wherein when the first call chain information is the same as the second call chain information, the second request comprises the first call chain information or the second call chain information, and the processing unit is specifically configured to:
obtain a sum of public keys based on the first public key;
obtain a second signature credential based on the first call chain information or the second call chain information, and the sum of public keys;
obtain second to-be-verified information based on the third signature; and
determine, based on the second signature credential and the second to-be-verified information, whether the check on the third signature succeeds.

29. The node according to any one of claims 24 to 28, wherein the second request further comprises a first fresh value, the first fresh value indicates timeliness of the first call chain information, and the second signature is obtained by signing the first call chain information and the first fresh value.

30. The node according to any one of claims 24 to 29, wherein the second request further comprises second control flow information, and the second control flow information indicates a running path of a control program of the second node; and
when the check on the third signature succeeds, the processing unit is further configured to:
check whether the second control flow information is correct.

31. The node according to any one of claims 24 to 30, wherein when the check on the third signature succeeds and the check on the second control flow information succeeds,
the processing unit is further configured to determine a fifth signature based on the third signature and a fourth signature, wherein the fourth signature is obtained by the third node by signing third call chain information, and the third call chain information indicates related node information of the first information in the third node; and
the communication unit is further configured to send a third request to a fourth node, wherein the third request comprises the fifth signature, and the third request is used to request the first information.

32. The node according to any one of claims 24 to 30, wherein when the check on the third signature succeeds and the check on the second control flow information succeeds,
the processing unit is further configured to:
respond, by the third node, to the first information based on the second request.

33. A node, comprising:
a memory, configured to store a computer program; and
a processor, configured to execute a computer program stored in the memory, to enable the node to perform the method according to any one of claims 1 to 7, or to enable the node to perform the method according to any one of claims 8 to 16.

34. A communication system, comprising the node according to any one of claims 17 to 23 and the node according to any one of claims 24 to 32.

35. A moving carrier, comprising the node according to any one of claims 17 to 23, or comprising the node according to any one of claims 24 to 32, or comprising the communication system according to claim 34.

36. The moving carrier according to claim 35, wherein the moving carrier is a vehicle.

37. A computer-readable storage medium, wherein the computer-readable storage medium stores a computer program; and when the computer program is executed by a computer, the method according to any one of claims 1 to 7 is implemented, or the method according to any one of claims 8 to 16 is implemented.

38. A computer program product, wherein the computer program product comprises computer program code, and when the computer program code is run on a computer, the method according to any one of claims 1 to 7 is implemented, or the method according to any one of claims 8 to 16 is implemented.

39. A chip, comprising a circuit, wherein the circuit is configured to perform the method according to any one of claims 1 to 7, or the circuit is configured to perform the method according to claims 8 to 16.
